# EUROPEAN PATENT APPLICATION

(11) **EP 4 535 200 A1**
(43) Date of publication of application: **09.04.2025**
(21) Application number: 23814874.6
(22) Date of filing: 05.05.2023
(51) Int. Cl.: G06F 16/957, G06F 9/44

(54) **MEDIA CONTENT DISPLAY METHOD AND APPARATUS, DEVICE, STORAGE MEDIUM, AND PROGRAM PRODUCT**

(30) Priority: 30.05.2022 CN 202210605759
(71) Applicant: Beijing Zitiao Network Technology Co., Ltd., Beijing 100190 (CN)
(72) Inventor: LUO, Song, Beijing 100028 (CN)
(74) Representative: Dentons UK and Middle East LLP
(86) International application number: PCT/CN2023/092143
(87) International publication number: WO 2023/231688

(57) **Abstract**

The embodiment of the disclosure provides a method, apparatus, device, storage medium and program product for presenting media content and. The method includes the following steps: presenting media content in a preset page, and displaying a predetermined identity list in an identity area of the predetermined page, wherein the predetermined page is a currently displayed media content presenting page, and the predetermined identity list comprises a first page identity corresponding to at least one media content presenting page; in response to a window displaying operation acting on the predetermined page, displaying a configuration window in the predetermined page, and keeping presenting the media content in the predetermined page, wherein the configuration window is set to configure the first page identity in the predetermined identity list.

## Description

This disclosure claims priority to Chinese Patent Application No. 202210605759.7, filed on May 30, 2022, the entire content of which is incorporated herein by reference.

### FIELD

The embodiment of the disclosure relates to the technical field of computers, in particular to a method, apparatus, device, storage medium and a program product for presenting media content.

### BACKGROUND

Currently, when a predetermined page is displayed, page tags of other pages may be displayed in the predetermined page, so that a user may perform a page switching.

However, the process of managing the page labels displayed in the predetermined page by the user is cumbersome, resulting in poor user experience.

### SUMMARY

The embodiment of the disclosure provides a method, apparatus, device, storage medium and a program product for presenting media content, so as to simplify operations required by a user for label management.

According to a first aspect, an embodiment of the present disclosure provides a method for presenting media content, including:
Presenting media content in a preset page, and displaying a predetermined identity list in an identity area of the predetermined page, wherein the predetermined page is a currently displayed media content presenting page, and the predetermined identity list comprises a first page identity corresponding to at least one media content presenting page;
In response to a window displaying operation acting on the predetermined page, displaying a configuration window in the predetermined page, and keeping presenting the media content in the predetermined page, wherein the configuration window is set to configure the first page identity in the predetermined identity list.

According to a second aspect, an embodiment of the present disclosure further provides an apparatus for presenting media content, including:
A content presenting module, configured to: present media content in a predetermined page, and display a predetermined identity list in an identity area of the predetermined page, wherein the predetermined page is a currently displayed media content presenting page, and the predetermined identity list comprises a first page identity corresponding to at least one media content presenting page;

A window displaying module, configured to: in response to a window displaying operation acting on the predetermined page, display a configuration window in the predetermined page and keep presenting the media content in the predetermined page, wherein the configuration window is set to configure the first page identity in the predetermined identity list.

According to a third aspect, an embodiment of the present disclosure further provides an electronic device, including:
One or more processors;
A memory is configured to store one or more programs;
When the one or more programs are executed by the one or more processors, the one or more processors implement the method for presenting media content according to the embodiments of the present disclosure.

According to a fourth aspect, an embodiment of the present disclosure further provides a computer-readable storage medium, storing a computer program thereon, the program, when executed by a processor, implementing the method for presenting media content according to the embodiment of the present disclosure.

According to a fifth aspect, an embodiment of the present disclosure further provides a computer program product, when executed by a computer, causing the computer to implement the method for presenting media content according to the embodiment of the present disclosure.

### BRIEF DESCRIPTION OF DRAWINGS

The above and other features, advantages and aspects of embodiments of the present disclosure will become more apparent with reference to the following detailed description taken in conjunction with the accompanying drawings. Throughout the drawings, the same or similar reference numerals denote the same or similar elements. It should be understood that the drawings are schematic and that elements and elements are not necessarily drawn to scale.
FIG. 1 is a schematic flowchart of a method for presenting media content according to embodiments of the present disclosure;
FIG. 2 is a schematic diagram of displaying a first page identity according to embodiments of the present disclosure;
FIG. 3 is a schematic diagram of displaying another page identity according to embodiments of the present disclosure;
FIG. 4 is a schematic diagram of displaying a configuration window according to embodiments of the present disclosure;
FIG. 5 is a schematic flowchart of another method for presenting media content according to embodiments of the present disclosure;
FIG. 6 is a schematic diagram of displaying another configuration window according to embodiments of the present disclosure;
FIG. 7 is a structural block diagram of a device for presenting media content according to embodiments of the present disclosure;
FIG. 8 is a schematic structural diagram of an electronic device provided by embodiments of the present disclosure.

### DETAILED DESCRIPTION

Embodiments of the present disclosure will be described below with reference to the accompanying drawings. Although certain embodiments of the present disclosure are shown in the accompanying drawings, it should be understood that the present disclosure may be implemented in various forms, and these embodiments are provided for a more thorough and complete understanding of the present disclosure. It should be understood that the drawings and embodiments of the present disclosure are for exemplary purposes only.

It should be understood that the steps described in the method embodiments of the present disclosure may be performed in different orders and/or performed in parallel. Further, method embodiments may include additional steps and/or omit performing the illustrated steps.

As used herein, the term "including" and variants thereof are open-ended inclusive, i.e., "including but not limited to". The term "based on" is "based at least in part on". The term "one embodiment" means "at least one embodiment"; the term "another embodiment" means "at least one further embodiment"; the term "some embodiments" means "at least some embodiments". Related definitions of other terms will be given in the following description.

It should be noted that the concepts such as "first" and "second" mentioned in the present disclosure are only used to distinguish different apparatuses, modules, or units.

It should be noted that the modifications of "a" and "a plurality of" mentioned in the present disclosure are illustrative, and those skilled in the art should understand that "one or more" should be understood unless the context clearly indicates otherwise.

Names of messages or information interacted between multiple devices in embodiments of the present disclosure are for illustrative purposes only.

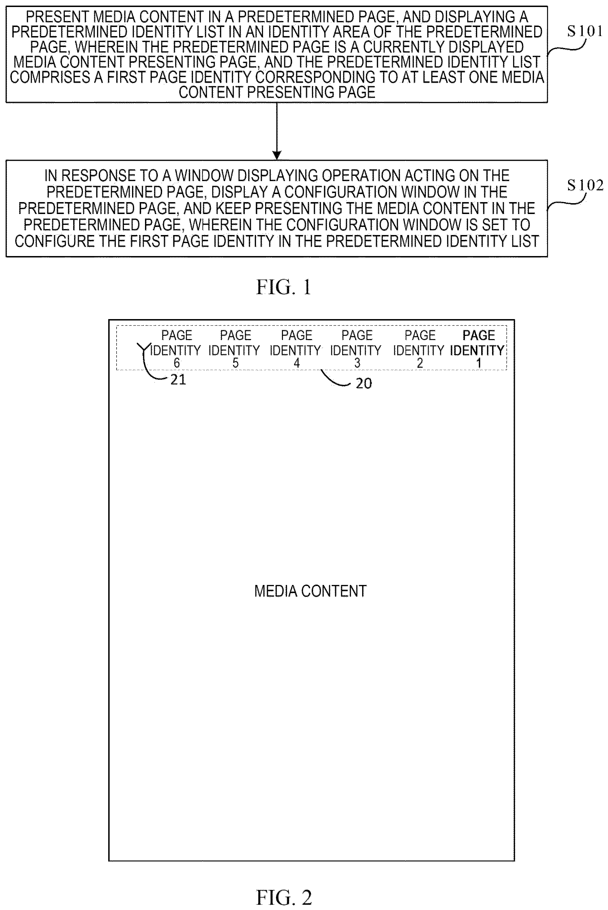

FIG. 1 is a schematic flowchart of a method for presenting media content according to an embodiment of the present disclosure. The method may be performed by an apparatus for presenting media content, where the apparatus may be implemented by software and/or hardware, may be configured in an electronic device, for example, may be configured in a tablet computer. The method for presenting media content provided by the embodiment of the disclosure is suitable for a scene of managing page identities displayed in a media content presenting page. As shown in FIG. 1, the method for presenting media content provided in this embodiment may include the following steps.

S101: Present media content in a preset page, and display a predetermined identity list in an identity area of the predetermined page, wherein the predetermined page is a currently displayed media content presenting page, and the predetermined identity list includes a first page identity corresponding to at least one media content presenting page.

Herein, the predetermined page may be a media content presenting page, for example, a page corresponding to any first page identity included in a predetermined identity list. That is, when the page corresponding to each first page identity included in the predetermined identity list is displayed, the page may be considered as the predetermined page. The media content presented on the predetermined page may be understood as media content currently displayed on the predetermined page, and the media content may be, for example, a video and/or a picture and so on. The identity area may be understood as an area for displaying the predetermined identity list, that is, an area for displaying the first page identification in the predetermined identity list. The predetermined identity list may include a first page identity fixedly set by the developer (that is, the user cannot delete the first page identity from the predetermined identity list), and/or a first page identity set by the user according to a requirement. The first page identity may be understood as a page identity already included in the predetermined identity list, and may be a page identity corresponding to a media content presenting page. That is, the predetermined identity list may include page identities corresponding to at least two media content presenting pages including a predetermined page. Different media content presentation pages may be used to present different media content, for example, presenting media content of different topics, media content of different types, or media content published by other users having different associations with the current user.

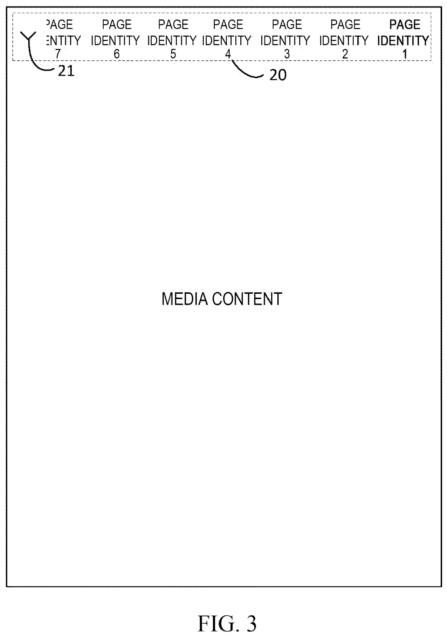

In an embodiment, when a predetermined page is displayed, for example, when a media content presenting page corresponding to any first page identity included in a predetermined identity list is displayed, media content may be displayed in a media content display area (for example, a main display area of the predetermined page) of the predetermined page, and at least some first page identities in the predetermined identity list are displayed in an identity area 20 of the predetermined page, as shown in FIG. 2 and FIG. 3. Therefore, the user may instruct the electronic device to switch the current page from the predetermined page to the page corresponding to the first page identity by triggering a certain first page identity displayed in the identity area; or perform page switching according to an arrangement sequence of the first page identities in the identity area (that is, an arrangement sequence of the first page identities in the predetermined identity list) by sliding the media content display area of the predetermined page in an arrangement direction of the first page identities.

In this embodiment, when the predetermined page is a displaying page corresponding to certain media content, the media content displayed in the predetermined page may be the media content; when the predetermined page is a media content browsing page, the media content displayed in the predetermined page may be media content in a media content stream corresponding to the predetermined page, which may be automatically switched according to a predetermined rule or switched based on a media content switching operation of a user.

When the first page identity in the predetermined identity list is displayed in the identity area 20 of the predetermined page, for example, if the first page identity included in the predetermined identity list may be completely displayed in the identity area, that is, if the predetermined identity list includes a relatively small quantity of first page identities, all of the first page identities included in the predetermined identity list may be displayed in the identity area 20, as shown in FIG. 2; or if the first page identity included in the predetermined identity list cannot be completely displayed in the identity area, that is, if the predetermined identity list includes a relatively large quantity of first page identities, some first page identities in the predetermined identity list may be displayed in the identity area 20, as shown in FIG. 3.

S102, in response to a window displaying operation acting on the predetermined page, displaying a configuration window in the predetermined page, and keeping presenting the media content in the predetermined page, wherein the configuration window is set to configure the first page identity in the predetermined identity list.

In this embodiment, the user may directly configure the page identity displayed on the predetermined page, that is, the user may complete configuration of the page identity displayed on the predetermined page while watching the media content, without switching to a configuration page through a series of trigger operations, and without interrupting viewing of the media content, thereby simplifying operations required for setting the page identity on the premise of meeting a page identity setting requirement of the user, maintaining continuity of watching the media content by the user, and improving user experience.

As used herein, the window displaying operation may be understood as an operation of displaying a configuration window of the first page identity, for example, an operation of triggering a window control displayed in the identity area. The configuration window may be understood as a window for configuring the first page identity in the predetermined identity list, that is, a window for configuring the first page identity for display in the identity area.

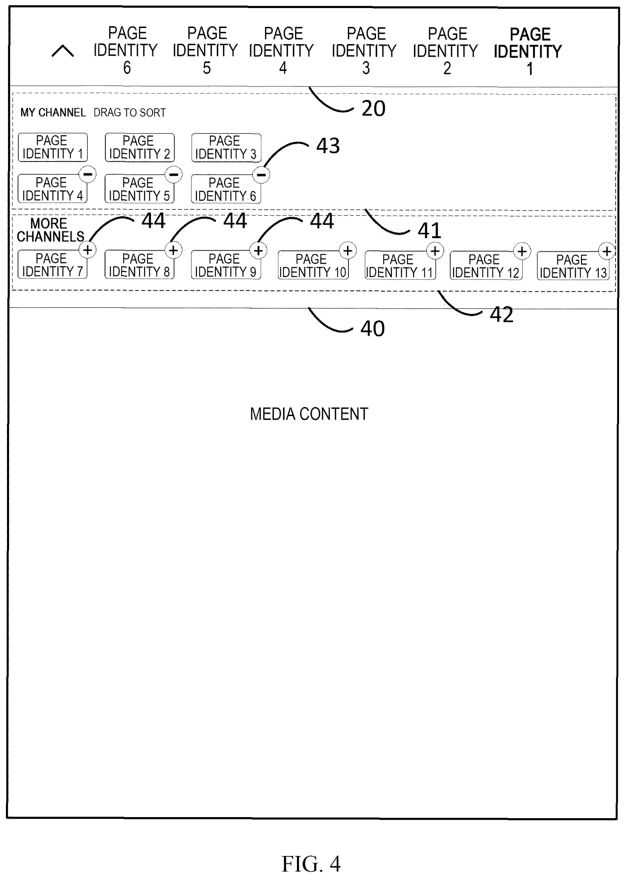

In an embodiment, when the user wants to configure the first page identity displayed in the identity area, the user may perform a window displaying operation, for example, trigger the configuration control 21 displayed in the predetermined page, as shown in FIG. 2 and FIG. 3 (taking the configuration control 21 displayed in the identity area 20 as an example). Correspondingly, when detecting the window displaying operation of the user, the electronic device may display the configuration window 40 in the predetermined page, as shown in FIG. 4, for example, control the configuration window 40 to pop up from one side of the predetermined page or the identity area 20, and continue to display the media content in the predetermined page in the process of displaying the configuration window 40. Therefore, while watching the media content, the user may configure the first page identity displayed in the identity area 20 through the configuration window 40, and may trigger the configuration control 21 again after the configuration is completed, to instruct the electronic device to close the configuration window.

When the configuration window is displayed, for example, the configuration window may be displayed above the media content displayed in the predetermined page (as shown in FIG. 4); or a window display area may be created in the predetermined page, the configuration window is displayed in the window display area, and the size of the media content display area in the predetermined page and/or the display size of the media content are reduced according to the size of the window display area.

According to the method for presenting media content provided in this embodiment, media content is displayed in a predetermined page, and a predetermined identity list is displayed in an identity area of the predetermined page, where the predetermined page is a currently displayed media content presenting page, and the predetermined identity list includes a first page identity corresponding to at least one media content presenting page; and a configuration window is displayed in the predetermined page in response to a window displaying operation acting on the predetermined page, and the media content is displayed in the predetermined page, where the configuration window is set to configure the first page identity in the predetermined identity list. By adopting the technical scheme, the configuration window used for setting the page identity displayed in the predetermined page is displayed in the predetermined page, so that the operation required for setting the page identity can be simplified on the premise of meeting the page identity setting requirement of the user, the continuity of the user for watching the media content is maintained, and the user experience is improved.

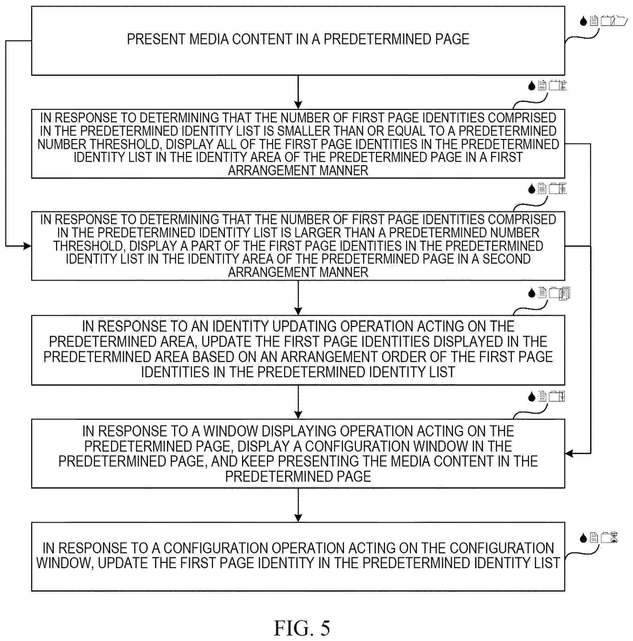

FIG. 5 is a schematic flowchart of another method for presenting media content according to an embodiment of the present disclosure. The solution in this embodiment may be combined with one or more optional solutions in the foregoing embodiments. Optionally, after displaying the configuration window of the first page identity in the predetermined page, the method further includes: updating the first page identity in the predetermined identity list in response to a configuration operation acting on the configuration window.

Optionally, displaying the predetermined identity list in the identity area of the predetermined page includes: in response to determining that the number of first page identities included in the predetermined identity list is smaller than or equal to a predetermined number threshold, displaying all of the first page identities in the predetermined identity list in the identity area of the predetermined page in a first arrangement manner; in response to determining that the number of first page identities included in the predetermined identity list is larger than a predetermined number threshold, displaying a part of the first page identities in the predetermined identity list in the identity area of the predetermined page in a second arrangement manner.

Optionally, after displaying the part of the first page identities in the predetermined identity list in the identity area of the predetermined page in the second arrangement mode, the method further includes: in response to an identity updating operation acting on the predetermined area, updating the first page identities displayed in the predetermined area based on an arrangement order of the first page identities in the predetermined identity list.

Correspondingly, as shown in FIG. 5, the method for presenting media content provided in this embodiment may include the following steps.

S201, present media content in a predetermined page, and perform S202 or S203, where the predetermined page is a currently displayed media content presenting page.

S202, in response to determining that the number of first page identities included in the predetermined identity list is smaller than or equal to a predetermined number threshold, display all of the first page identities in the predetermined identity list in the identity area of the predetermined page in a first arrangement manner, where the predetermined identity list includes a first page identity corresponding to at least one media content presenting page, and performing S205.

In this embodiment, the first page identity in the predetermined identity list may be displayed in the identity area in different arrangements according to the number of the first page identities in the predetermined identity list, thereby providing convenience for the user to view the first page identity, further improving the visual effect when the first page identity is displayed in the identity area, and improving the user experience.

Exemplarily, when the quantity of first page identities included in the predetermined identity list is less than or equal to the predetermined quantity threshold, that is, the quantity of first page identities that need to be displayed in the identity area 20 of the predetermined page is less than or equal to the predetermined quantity threshold, in other words, when the first page identities included in the predetermined identity list can be displayed in the identity area 20 of the predetermined page at the same time, all first page identities in the predetermined identity list may be displayed in the identity area 20 of the predetermined page in the first arrangement manner, as shown in FIG. 2, so that the user can completely view the first page identities in the predetermined identity list, thereby further providing convenience for the user to perform a page switching operation.

The first arrangement manner may be set as required, and the first page identities are arranged horizontally, for example, the first page identities in the predetermined identity list may be arranged in the identity area 20 from right to left or from left to right, for example, the first page identities in the predetermined identity list may be arranged centrally in the identity area 20, to improve a display effect when a quantity of first page identities is relatively small, as shown in FIG. 2. The predetermined quantity threshold may be flexibly set, for example, the predetermined quantity threshold may be set to 5, 6, or 7.

S203, in response to determining that the number of first page identities included in the predetermined identity list is larger than a predetermined number threshold, display a part of the first page identities in the predetermined identity list in the identity area of the predetermined page in a second arrangement manner, where the predetermined identity list includes a first page identity corresponding to at least one media content presenting page, and performing S204 or S205.

Exemplarily, when the quantity of first page identities included in the predetermined identity list is greater than the predetermined quantity threshold, that is, when the quantity of first page identities that need to be displayed in the identity area 20 of the predetermined page is greater than the predetermined quantity threshold, in other words, when the first page identities included in the predetermined identity list cannot all be displayed in the identity area 20 of the predetermined page at the same time, the first page identities in the predetermined identity list may be displayed in the identity area 20 of the predetermined page in the second arrangement manner, as shown in FIG. 3.

The second arrangement manner may be set as required. Taking the first page identities are arranged horizontally as an example, the first page identities in the predetermined identity list may be arranged centrally in the identity area 20, for example, the first page identities in the predetermined identity list may be arranged in the identity area 20 from right to left (as shown in FIG. 2) or from left to right, so as to avoid a case in which a user needs to slide in different directions to completely view the first page identities included in the predetermined identity list, and further simplify an operation of the user.

It should be noted that the execution sequence of the steps S201-S203 in this embodiment may be adjusted as required. In fact, both S202 and S203 may be executed simultaneously with S201, for example, when receiving a trigger operation for displaying a predetermined page, the electronic device may determine whether the number of first page identities included in the predetermined identity list is less than or equal to a predetermined number threshold; display the predetermined page in response to determining that the number of first page identities included in the predetermined identity list is less than or equal to the predetermined number threshold; display media content in the predetermined page, and display all first page identities in the predetermined identity list in the identity area of the predetermined page in the first arrangement manner; and display the predetermined page in response to determining that the number of first page identities included in the predetermined identity list is greater than the predetermined number threshold, display media content in the predetermined page, and display a part of the first page identities in the predetermined identity list in the identity area of the predetermined page in a second arrangement manner .

S204, in response to an identity updating operation acting on the predetermined area, update the first page identities displayed in the predetermined area based on an arrangement order of the first page identities in the predetermined identity list.

The identity updating operation may be understood as an operation of updating the first page identity displayed in the identity area, for example, a sliding operation acting on the predetermined area. For example, when the first page identities are horizontally arranged in the identity area, the sliding operation may be a horizontal sliding operation.

For example, when the user wants to view the first page identity that is not displayed in the identity area, an identity updating operation may be performed, for example, sliding horizontally in the identity area. Correspondingly, when receiving the identity updating operation of the user, the electronic device may update the first page identities displayed in the identity area in batches, or control the first page identities in the identity area to move in a movement direction corresponding to the identity updating operation, so as to move the first page identities that are not displayed to the identity area for display.

S205, in response to a window displaying operation acting on the predetermined page, display a configuration window in the predetermined page, and keep presenting the media content in the predetermined page, wherein the configuration window is set to configure the first page identity in the predetermined identity list.

S206: in response to a configuration operation acting on the configuration window, update the first page identity in the predetermined identity list.

In this embodiment, the user may configure the first page identity in the predetermined identity list by using the configuration window, that is, set the first page identity displayed/used for display in the identity area of the predetermined page, to meet a requirement of the user. The configuration operation may be, for example, a trigger operation for deleting one or more first page identities in the predetermined identity list, a trigger operation for adding one or more first page identities to the predetermined identity list, or a trigger operation for adjusting an arrangement order of the first page identities in the predetermined identity list.

When the first page identities in the predetermined identity list are updated, for example, the first page identities included in the predetermined identity list may be added or deleted, or an arrangement order of the first page identities in the predetermined identity list may be updated. In this case, optionally, the updating a first page identity in the predetermined identity list includes: deleting a target first page identity in the predetermined identity list; or adding a target second page identity to the predetermined identity list as a first page identity; or adjusting an arrangement order of the target first page identity in the predetermined identity list, where the target first page identity is a first page identity corresponding to the configuration operation, the target second page identity is a second page identity corresponding to the configuration operation, and the second page identity is a page identity not included in the predetermined identity list.

In one embodiment, the first page identity and the second page identity may be displayed in different regions within the configuration window. In this case, optionally, the configuration window includes a first area and a second area, the first area is set to show a first page identity already included in the predetermined identity list, and the second area is set to show a second page identity not included in the predetermined identity list; and the configuration operation includes a first configuration operation of dragging the target first page identity from the first area to the second area, a second configuration operation of dragging the target second page identity from the second area to the first area, or a third configuration operation of dragging the target first page identity within the first area.

In an embodiment, as shown in FIG. 4, the configuration window 40 may include a first area 41 and a second area 42. The first area 41 displays a page identity (that is, the first page identity) that can be displayed in the identity area 20, that is, a page identity that has been added to the predetermined identity list. The second area 42 displays a page identity (that is, a second page identity) that cannot be currently displayed in the identity area 20, that is, a page identity that has not been added to the predetermined identity list.

Therefore, the configuration operation may include an operation of dragging the page identity displayed in the configuration window, for example, a first configuration operation of dragging a page identity displayed in the first area from the first area to the second area, a second configuration operation of dragging a page identity displayed in the second area from the second area to the first area, or a third configuration operation of dragging and adjusting an arrangement order of page identities displayed within the first area.

In the above implementation, before updating the first page identity in the predetermined identity list, the method may further include: controlling a target page identity corresponding to the configuration operation to move along with the configuration operation, wherein the target page identity is the target first page identity or the target second page identity; updating the first page identity in the predetermined identity list may include: in response to an end of triggering the configuration operation, displaying the target page identity at a displaying position corresponding to the configuration operation in the configuration window, and updating the first page identity in the predetermined identity list.

Exemplarily, when it is detected that the user drags a certain first page identity, the first page identity is used as a target first page identity, and the target first page identity is controlled to move along with the dragging operation of the user. If the user ends dragging after dragging the target first page identity to the second area, it is determined that the first configuration operation is received, and in response to the first configuration operation, the target first page identity is displayed at the displaying position indicated by the first configuration operation in the second area, and the target first page identity is deleted from the predetermined identity list, that is, the target first page identity is no longer displayed in the identity area; if the user ends dragging after dragging the target first page identity to a position in the first area, it is determined that the third configuration operation is received, and in response to the third configuration operation, the target first page identity is displayed at the displaying position indicated by the third configuration operation in the first area, and according to the arrangement order of the target first page identity in the first area after the third configuration operation is executed, the arrangement order of the target first page identity in the predetermined identity list is updated, and then the arrangement order of the target first page identity and other first page identities when displayed in the identity area is updated.

When it is detected that the user drags a second page identity, the second page identity is used as a target second page identity, and the target second page identity is controlled to move along with the dragging operation of the user. If the user ends dragging after dragging the target second page identity to the first area, it is determined that the second configuration operation is received, the target second page identity is displayed at the displaying position indicated by the second configuration operation in the first area in response to the second configuration operation, and the target second page identity is added to the predetermined identity list as the first page identity according to the arrangement sequence of the target second page identity in the first area, that is, the target second page identity is set as the first page identity, so as to display the target second page identity in the identity area.

In an implementation, the configuration window displays at least one of the following: a deleting control corresponding to at least part of the first page identity already included in the predetermined identity list, an adding control corresponding to a second page identity not included in the predetermined identity list; and the configuration operation includes: a fourth configuration operation acting on a deleting control corresponding to a target first page identity, a fifth configuration operation acting on an adding control corresponding to a target second page identity, or a sixth configuration operation of dragging the target first page identity within the configuration window.

In an embodiment, still referring to FIG. 4, the configuration window 40 may display a deleting control 43 corresponding to at least some first page identities (for example, a first page identity that allows the user to delete the first page identity from the predetermined identity list), and/or an adding control 44 corresponding to each second page identity. It should be noted that, in this case, a first area 41 for displaying a first page identity and a second area 42 for displaying a second page identity may be provided in the configuration window 40, that is, each first page identity may be displayed in the first area 41, and each second page identity may be displayed in the second area 42 (as shown in FIG. 4); or the first area 41 for displaying a first page identity and the second area 42 for displaying a second page identity may not be provided, for example, each first page identity and each second page identity may be mixed and arranged in the configuration window 40.

Therefore, the configuration operation may include a fourth configuration operation of triggering a deleting control corresponding to a first page identity, a fifth configuration operation of triggering an adding control corresponding to a second page identity, a sixth configuration operation of dragging and adjusting an arrangement order of the first page identities within the configuration window and so on.

In the above implementations, the deleting the target first page identity in the predetermined identity list may include: displaying the target first page identity at a displaying position corresponding to the configuration operation in the configuration window, deleting the target first page identity from the predetermined identity list, and switching from displaying the deleting control corresponding to the target first page identity to displaying an adding control.

Exemplarily, when it is detected that the user triggers a deleting control corresponding to a certain first page identity (that is, the target first page identity), it may be determined that a fourth configuration operation is received; in response to the fourth configuration operation, the first page identity is deleted from the predetermined identity list, that is, the first page identity is no longer displayed in the identity area, and the deleting control corresponding to the first page identity is switched to be displayed as the adding control.

In the above implementations, the adding the target second page identity to the predetermined identity list as the first page identity may include: displaying the target second page identity at a displaying position corresponding to the configuration operation in the configuration window, adding the target second page identity to the predetermined identity list as the first page identity, and switching and displaying the adding control corresponding to the target second page identity as the deleting control.

Exemplarily, when it is detected that the user triggers the adding control corresponding to a certain second page identity (that is, the target second page identity), it may be determined that a fifth configuration operation is received, and in response to the fifth configuration operation, the second page identity is added to the predetermined identity list as the first page identity according to an arrangement sequence of the second page identity and other first page identities in the configuration window, that is, the second page identity is set as the first page identity to display the second page identity in the identity area, and the adding control corresponding to the second page identity is switched to display as the deleting control.

In the above implementations, before the adjusting an arrangement order of the target first page identity in the predetermined identity list, the method may further include: controlling the target first page identity to move along with the configuration operation in the configuration window; adjusting the arrangement order of the target first page identity in the predetermined identity list may include: in response to an end of trigging the configuration operation, displaying the target first page identity at a displaying position corresponding to the configuration operation in the configuration window, and adjusting the arrangement order of the target first page identity in the predetermined identity list based on an arrangement order of the target first page identity in the configuration window.

Exemplarily, when it is detected that the user drags a first page identity, it is determined that a sixth configuration operation is received, and in response to the sixth configuration operation, the first page identity and the deleting control corresponding to the first page identity are controlled to move along with the dragging operation of the user; and in response to detecting that the user ends the dragging, the first page identity is displayed at the displaying position indicated by the sixth configuration operation in the configuration window, and the arrangement order of the first page identities (including the first page identity dragged by the sixth trigger operation) in the configuration window is updated according to the arrangement order of the first page identities in the configuration window after the sixth configuration operation is executed, that is, the display order of the first page identities when being displayed in the identity area is updated.

In an exemplary embodiment, as shown in FIG. 4, the configuration window 40 may be provided with a first area 41 and a second area 42. A deleting control 43 corresponding to each first page identity added to the predetermined identity list and at least some of the first page identities may be displayed in the first area 41. The second area 42 may display each second page identity that has not been added to the predetermined identity list and an adding control 44 corresponding to each second page identity.

Therefore, the user may delete the first page control from the predetermined identity list by dragging a certain first page identity from the first area to the second area or by triggering a deleting control corresponding to the certain first page identity.

Correspondingly, when it is detected that the user drags a certain first page identity from the first area to the second area or detects that the user triggers a deleting control corresponding to a certain first page identity, that is, when it is detected that the user performs the first configuration operation or the fourth configuration operation, the first page identity may be displayed at a displaying position indicated by the drag operation in the second area (for a case in which the first configuration operation is detected) or the first page identity may be displayed at a predetermined position of the second area (for example, after the last second page identity displayed in the second area) (for a case in which the fourth configuration operation is detected), a displaying position of each second page identity in the second area and/or a displaying position of each first page identity in the first area are adaptively adjusted according to the displaying position of the first page identity, the first page identity is deleted from a predetermined identity list, and the deleting control corresponding to the first page identity is switched to be displayed as an adding control.

The user may also add the second page identity as the first page identity to the predetermined identity list in a manner of dragging the second area of the second page identity to the first area or in a manner of triggering the adding control corresponding to the second page identity.

Correspondingly, when it is detected that the user drags a certain second page identity from the second area to the first area or detects that the user triggers an adding control corresponding to a certain second page identity, that is, when it is detected that the user performs the second configuration operation or the fifth configuration operation, the second page identity may be displayed at a displaying position indicated by the drag operation in the first area (for a case in which the second configuration operation is detected) or the second page identity may be displayed at a predetermined position of the first area (for example, after the last first page identity displayed in the first area) (for a case in which the fifth configuration operation is detected), a displaying position of each first page identity in the first area and/or a displaying position of each second page identity in the second area are adaptively adjusted according to the displaying position of the second page identity, the second page identity is added to a predetermined identity list, and the adding control corresponding to the second page identity is switched to be displayed as a deleting control.

The user may further adjust an arrangement order of the first page identities in the predetermined identity list by dragging the first page identities in the first area. In this case, the sixth configuration operation may be an operation the same as the third configuration operation, that is, the sixth configuration operation may be an operation of dragging the first page identity in the first area of the configuration window.

Correspondingly, when it is detected that the user drags a certain first page identity in the first area, that is, when it is detected that the user performs the third configuration operation/the sixth configuration operation, the first page identity and the deleting control corresponding to the first page identity may be controlled to move along with the dragging operation of the user; and when it is detected that the dragging of the user ends, the first page identity is displayed at the displaying position indicated by the dragging operation in the first area, and the arrangement order of the first page identities in the first area is updated according to the arrangement order of the first page identities in the first area after the dragging operation is performed.

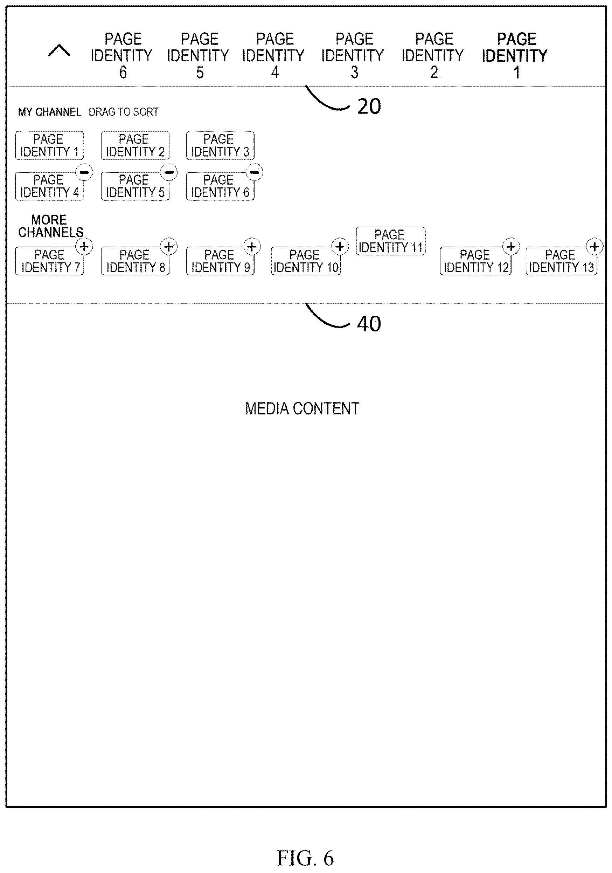

In addition, in a process in which the user performs the drag operation, display of the deleting control/adding control corresponding to the drag operation may also be canceled, as shown in FIG. 6, so that the user can specify the page identity dragged by the user. For example, because the drag operation generally includes three steps: long pressing, moving, and lifting, when it is detected that the user long presses a certain first page identity/second page identity, display of the deleting control/adding control corresponding to the first page identity/second page identity may be canceled. When it is detected that the user is lifted after dragging, that is, when it is detected that the user ends dragging, if the first page identity/the second page identity is located in the first area when dragging ends, the deleting control corresponding to the first page identity/the second page identity may be displayed; and if the first page identity/the second page identity is located in the second area when dragging ends, the adding control corresponding to the first page identity/the second page identity may be displayed.

According to the method for presenting media content provided in this embodiment, the first page identity is displayed in the predetermined area in different arrangement manners according to the quantity of the first page identities, and the first page identity is updated based on the configuration operation of the user in the configuration window, so that operations required for configuring the page identity by the user can be simplified, a visual effect of displaying the first page identity in the identity area is further improved, and user experience is improved.

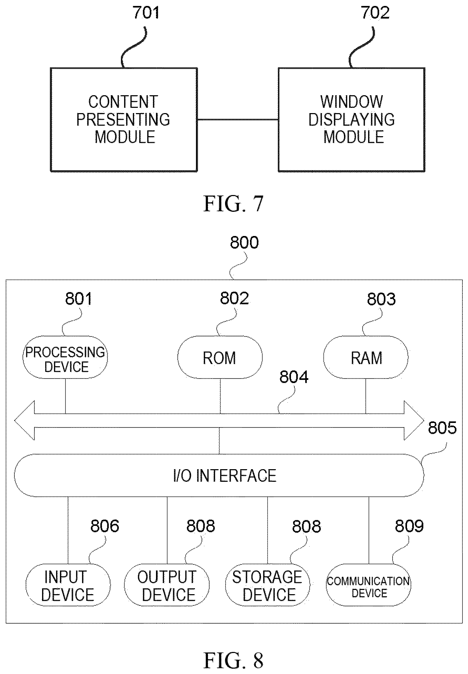

FIG. 7 is a structural block diagram of an apparatus for presenting media content according to an embodiment of the present disclosure. The apparatus may be implemented by software and/or hardware, may be configured in an electronic device, for example, may be configured in a tablet computer, and may manage a page identity displayed on a media content presenting page by executing a method for presenting media content. As shown in FIG. 7, the apparatus for presenting media content provided in this embodiment may include: a content presenting module 701 and a window displaying module 702.

The content presenting module 701 is configured to present media content in a predetermined page, and display a predetermined identity list in an identity area of the predetermined page, wherein the predetermined page is a currently displayed media content presenting page, and the predetermined identity list includes a first page identity corresponding to at least one media content presenting page;
The window displaying module 702 is configured to in response to a window displaying operation acting on the predetermined page, display a configuration window in the predetermined page and keep presenting the media content in the predetermined page, wherein the configuration window is set to configure the first page identity in the predetermined identity list.

According to the apparatus for presenting media content provided in this embodiment, the content presenting module presents media content in a predetermined page, and displays a predetermined identity list in an identity area of the predetermined page, where the predetermined page is a currently displayed media content presenting page, and the predetermined identity list includes a first page identity corresponding to at least one media content presenting page; and a window displaying module displays a configuration window in the predetermined page in response to a window displaying operation acting on the predetermined page, and keeps presenting media content in the predetermined page, where the configuration window is used to configure the first page identity in the predetermined identity list. By adopting the technical solution, the configuration window used for setting the page identity presented in the predetermined page is displayed in the predetermined page, so that the operation required for setting the page identity can be simplified on the premise of meeting the page identity setting requirement of the user, the continuity of the user for watching the media content is maintained, and the user experience is improved.

In an embodiment, the apparatus for presenting media content provided in this embodiment may further include: a first identify updating module, configured to update the first page identity in the predetermined identity list in response to a configuration operation acting on the configuration window, after displaying the configuration window of the first page identity in the predetermined page.

In an embodiment, the first identify updating module may include: an identify deleting unit, configured to delete a target first page identity in the predetermined identity list; or an identify adding unit, configured to add a target second page identity as a first page identity to the predetermined identity list; or an order adjusting unit, configured to adjust an arrangement order of the target first page identity in the predetermined identity list, where the target first page identity is a first page identity corresponding to the configuration operation, the target second page identity is a second page identity corresponding to the configuration operation, and the second page identity is a page identity not included in the predetermined identity list.

In an embodiment, the configuration window may include a first area and a second area, the first area is set to present a first page identity already included in the predetermined identity list, the second area is set to present a second page identity not included in the predetermined identity list; and the configuration operation may include a first configuration operation of dragging a target first page identity from the first area to the second area, a second configuration operation of dragging a target second page identity from the second area to the first area, or a third configuration operation of dragging a target first page identity within the first area .

In an embodiment, the media content display apparatus provided in this embodiment may further include: a first movement control module, configured to control, before updating the first page identity in the predetermined identity list, a target page identity corresponding to the configuration operation to move along with the configuration operation, where the target page identity is the target first page identity or the target second page identity; and the first identify updating module may be configured to in response to an end of triggering the configuration operation, display the target page identity at a displaying position corresponding to the configuration operation in the configuration window, and updating the first page identity in the predetermined identity list.

In an embodiment, at least one of the following may be displayed in the configuration window: a deleting control corresponding to at least part of the first page identity already included in the predetermined identity list, an adding control corresponding to a second page identity not included in the predetermined identity list; and the configuration operation may include: a fourth configuration operation acting on a deleting control corresponding to a target first page identity, a fifth configuration operation acting on an adding control corresponding to a target second page identity, or a sixth configuration operation of dragging the target first page identity within the configuration window.

In an embodiment, the identify deleting unit may be configured to display the target first page identity at a displaying position corresponding to the configuration operation in the configuration window, delete the target first page identity from the predetermined identity list, and switch from displaying the deleting control corresponding to the target first page identity to displaying an adding control.

In an embodiment, the identify adding unit may be configured to display the target second page identity at a displaying position corresponding to the configuration operation in the configuration window, add the target second page identity as a first page identity to the predetermined identity list, and switch from displaying the adding control corresponding to the target second page identity to displaying a deleting control.

In an embodiment, the apparatus for presenting media content provided in this embodiment may further include: a second movement control module, configured to the target first page identity to move along with the configuration operation in the configuration window before adjusting the arrangement order of the target first page identity in the predetermined identity list; and the order adjustment unit may be configured to in response to an end of trigging the configuration operation, display the target first page identity at a displaying position corresponding to the configuration operation in the configuration window, and adjust the arrangement order of the target first page identity in the predetermined identity list based on an arrangement order of the target first page identity in the configuration window.

In an embodiment, the content presenting module 701 may be configured to: in response to determining that the number of first page identities included in the predetermined identity list is smaller than or equal to a predetermined number threshold, display all of the first page identities in the predetermined identity list in the identity area of the predetermined page in a first arrangement manner; in response to determining that the number of first page identities included in the predetermined identity list is larger than a predetermined number threshold, display a part of the first page identities in the predetermined identity list in the identity area of the predetermined page in a second arrangement manner.

In an embodiment, the apparatus for presenting media content provided in this embodiment may further include: a second identify updating module, configured to: after displaying the part of the first page identities in the predetermined identity list in the identity area of the predetermined page in the second arrangement mode, in response to an identity updating operation acting on the predetermined area, update the first page identities displayed in the predetermined area based on an arrangement order of the first page identities in the predetermined identity list.

The device for presenting media content provided by the embodiment of the present disclosure may execute the method for presenting media content provided by any embodiment of the present disclosure, and has corresponding functional modules and beneficial effects for executing the method for presenting media content. For technical details not described in detail in this embodiment, refer to the method for presenting media content provided in any embodiment of the present disclosure.

Referring to FIG. 8, a schematic structural diagram of an electronic device (for example, a terminal device) 800 suitable for implementing the embodiments of the present disclosure is shown. The terminal device in the embodiments of the present disclosure may include a mobile terminal such as a mobile phone, a notebook computer, a digital broadcast receiver, a personal digital assistant (PDA), a portable Android device, a portable multimedia player, a vehicle-mounted terminal (such as a vehicle-mounted navigation terminal), and a fixed terminal such as a digital television (TV) or a desktop computer. The electronic device shown in FIG. 8 is merely an example.

As shown in FIG. 8, the electronic device 800 may include a processing apparatus (such as a central processing unit, a graphics processor and so on) 801, which may perform various appropriate actions and processes according to a program stored in a read-only memory (ROM) 802 or a program loaded from a storage apparatus 808 into a random access memory (RAM) 803. The RAM 803 further stores various programs and data required for the operation of the electronic device 800. The processing device 801, the ROM 802, and the RAM 803 are connected to each other through a bus 804. An input/output (I/O) interface 805 is also connected to the bus 804.

Generally, the following devices may be connected to the I/O interface 805: an input device 806 including, for example, a touch screen, a touch pad, a keyboard, a mouse, a camera, a microphone, an accelerometer, a gyroscope and so on; an output device 807 including, for example, a liquid crystal display (LCD), a speaker, a vibrator and so on; a storage device 808 including, for example, a magnetic tape, a hard disk, and so on; and a communication device 809. The communication apparatus 809 may allow the electronic device 800 to perform wireless or wired communication with other devices to exchange data. Although FIG. 8 illustrates an electronic device 800 having various devices, it should be understood that not all illustrated devices are required to be implemented or provided. More or fewer devices may alternatively be implemented or provided.

In particular, according to embodiments of the present disclosure, the process described above with reference to the flowchart may be implemented as a computer software program. For example, embodiments of the present disclosure include a computer program product including a computer program carried on a non-transitory computer-readable medium, the computer program containing program code for performing the method shown in the flowchart. In such embodiments, the computer program may be downloaded and installed from a network through the communication device 809, or installed from the storage device 808, or installed from the ROM 802. When the computer program is executed by the processing apparatus 801, the foregoing functions in the method in the embodiments of the present disclosure are performed.

It should be noted that the computer-readable medium described above in the present disclosure may be a computer-readable signal medium or a computer-readable storage medium or any combination thereof. The computer-readable storage medium may be, for example, an electrical, magnetic, optical, electromagnetic, infrared, or semiconductor system, apparatus, or device, or any combination thereof. The computer-readable storage medium may include an electrical connection having one or more wires, a portable computer diskette, a hard disk, an RAM, an ROM, an erasable programmable read-only memory (EPROM or flash memory), an optical fiber, a portable compact disk read-only memory (CD-ROM), an optical storage device, a magnetic storage device, or any suitable combination thereof. In the present disclosure, a computer-readable storage medium may be any tangible medium containing or storing a program, and the program may be used by or in connection with an instruction execution system, apparatus, or device. In the present disclosure, a computer-readable signal medium may include a data signal propagating in baseband or as part of a carrier wave, wherein computer-readable program code is carried. Such propagated data signals may take many forms, including electromagnetic signals, optical signals, or any suitable combination of the foregoing. A computer readable signal medium may also be any computer readable medium other than a computer readable storage medium that can transmit, propagate, or transport programs for use by or in connection with an instruction execution system, apparatus, or device. The program code contained on the computer-readable medium may be transmitted by using any suitable medium, including an electric wire, an optical cable, a radio frequency (RF), or the like, or any suitable combination of the foregoing.

In some implementations, clients, servers may communicate using any currently known or future-developed network protocol, such as Hypertext Transfer Protocol (HTTP), and may be interconnected with any form or medium of digital data communication (e.g., communication network). Examples of communication networks include a local area network (LAN), a wide area network (WAN), an Internet (e.g., the Internet), and a peer-to-peer network (e.g., an ad hoc peer-to-peer network), as well as any currently known or future developed network.

The computer readable medium may be included in the electronic device, or may exist alone without being assembled into the electronic device.

The computer-readable medium carries one or more programs, and when the one or more programs are executed by the electronic device, the electronic device is enabled to: display media content in a predetermined page, and display a predetermined identity list in an identity area of the predetermined page, where the predetermined page is a currently displayed media content presenting page, and the predetermined identity list includes a first page identity corresponding to at least one media content presenting page; and display a configuration window in the predetermined page in response to a window displaying operation acting on the predetermined page, and keep displaying the media content in the predetermined page, where the configuration window is used to configure the first page identity in the predetermined identity list.

Computer program code for performing operations of the present disclosure may be written in one or more programming languages, including but not limited to an object oriented programming language such as Java, Smalltalk, C + +, and conventional procedural programming languages such as the "C" language or similar programming languages. The program code may execute entirely on the user computer, partly on the user computer, as a stand-alone software package, partly on the user computer, partly on a remote computer, or entirely on the remote computer or server. In situations involving a remote computer, the remote computer may be connected to a user computer through any kind of network, including a local area network (LAN) or a wide area network (WAN), or may be connected to an external computer (e.g., through the Internet using an Internet service provider).

The flowchart and block diagrams in the figures illustrate the architecture, functionality, and operation of possible implementations of systems, methods, and computer program products according to various embodiments of the present disclosure. In this regard, each block in a flowchart or block diagram may represent a module, segment, or portion of code containing one or more executable instructions for implementing specified logical functions. It should also be noted that in some alternative implementations, the functions noted in the blocks may also occur in a different order than those noted in the figures. For example, two successively represented blocks may in fact be executed substantially in parallel, or they may sometimes be executed in reverse order, depending on the functionality involved. It is also noted that each block in the block diagrams and/or flowcharts, and combinations of blocks in the block diagrams and/or flowcharts, may be implemented with a dedicated hardware-based system that performs the specified functions or operations, or may be implemented with a combination of dedicated hardware and computer instructions.

The units involved in the embodiments of the present disclosure may be implemented by software or hardware.

The functions described above herein may be performed, at least in part, by one or more hardware logic components. For example, exemplary types of hardware logic components that may be used include: Field Programmable Gate Array (FPGA), Application Specific Integrated Circuit (ASIC), Application Specific Standard Parts (ASSP), System on Chip (SOC), Complex Programmable Logic Device (CPLD), and the like.

In the context of the present disclosure, a machine-readable medium may be a tangible medium that may contain or store a program for use by or in connection with an instruction execution system, apparatus, or device. The machine-readable medium may be a machine-readable signal medium or a machine-readable storage medium. The machine-readable medium may include an electronic, magnetic, optical, electromagnetic, infrared, or semiconductor system, apparatus, or device, or any suitable combination thereof. The machine-readable storage medium may include one or more wire-based electrical connections, a portable computer diskette, a hard disk, RAM, ROM, erasable programmable read-only memory (EPROM or Flash memory), optical fiber, CD-ROM, optical storage devices, magnetic storage devices, or any suitable combination of the foregoing.

According to one or more embodiments of the present disclosure, example 2 provides a method for presenting media content, including:
Presenting media content in a preset page, and displaying a predetermined identity list in an identity area of the predetermined page, wherein the predetermined page is a currently displayed media content presenting page, and the predetermined identity list includes a first page identity corresponding to at least one media content presenting page;
In response to a window displaying operation acting on the predetermined page, displaying a configuration window in the predetermined page, and keeping presenting the media content in the predetermined page, wherein the configuration window is set to configure the first page identity in the predetermined identity list.

According to one or more embodiments of the present disclosure, example 2 provides the method of example 1, wherein after displaying the configuration window of the first page identity in the predetermined page, the method further includes:
In response to a configuration operation acting on the configuration window, updating the first page identity in the predetermined identity list.

According to one or more embodiments of the present disclosure, example 3 provides the method of example 2, wherein updating the first page identity in the predetermined identity list includes:
Deleting a target first page identity in the predetermined identity list; or,
Adding a target second page identity as the first page identity into the predetermined identity list; or,
Adjusting an arrangement order of a target first page identity in the predetermined identity list;
Wherein the target first page identity is a first page identity corresponding to the configuration operation, the target second page identity is a second page identity corresponding to the configuration operation, and the second page identity is a page identity not included in the predetermined identity list.

According to one or more embodiments of the present disclosure, example 4 provides the method of example 3, wherein the configuration window includes a first area and a second area, the first area is set to present a first page identity already included in the predetermined identity list, the second area is set to present a second page identity not included in the predetermined identity list;
The configuration operation includes a first configuration operation of dragging a target first page identity from the first area to the second area, a second configuration operation of dragging a target second page identity from the second area to the first area, or a third configuration operation of dragging a target first page identity within the first area.

According to one or more embodiments of the present disclosure, example 5 provides the method of example 4, wherein before updating the first page identity in the predetermined identity list, the method further includes:
Controlling a target page identity corresponding to the configuration operation to move along with the configuration operation, wherein the target page identity is the target first page identity or the target second page identity;
Updating the first page identity in the predetermined identity list includes:
   In response to an end of triggering the configuration operation, displaying the target page identity at a displaying position corresponding to the configuration operation in the configuration window, and updating the first page identity in the predetermined identity list.

According to one or more embodiments of the present disclosure, example 6 provides the method of example 3, wherein at least one of the following is displayed in the configuration window: a deleting control corresponding to at least part of the first page identity already included in the predetermined identity list, an adding control corresponding to a second page identity not included in the predetermined identity list;
The configuration operation includes: a fourth configuration operation acting on a deleting control corresponding to a target first page identity, a fifth configuration operation acting on an adding control corresponding to a target second page identity, or a sixth configuration operation of dragging the target first page identity within the configuration window.

According to one or more embodiments of the present disclosure, example 7 provides the method of example 6, wherein deleting the target first page identity in the predetermined identity list includes:
displaying the target first page identity at a displaying position corresponding to the configuration operation in the configuration window, deleting the target first page identity from the predetermined identity list, and switching from displaying the deleting control corresponding to the target first page identity to displaying an adding control.

According to one or more embodiments of the present disclosure, example 8 provides the method of example 6, wherein adding the target second page identity as the first page identity into the predetermined identity list includes:
Displaying the target second page identity at a displaying position corresponding to the configuration operation in the configuration window, adding the target second page identity as a first page identity to the predetermined identity list, and switching from displaying the adding control corresponding to the target second page identity to displaying a deleting control.

According to one or more embodiments of the present disclosure, example 9 provides the method of example 6, wherein before adjusting the arrangement order of the target first page identity in the predetermined identity list, the method further includes:
Controlling the target first page identity to move along with the configuration operation in the configuration window;
Adjusting the arrangement order of the target first page identity in the predetermined identity list includes:
   In response to an end of trigging the configuration operation, displaying the target first page identity at a displaying position corresponding to the configuration operation in the configuration window, and adjusting the arrangement order of the target first page identity in the predetermined identity list based on an arrangement order of the target first page identity in the configuration window.

According to one or more embodiments of the present disclosure, example 10provides the method of any of examples 1-9, wherein displaying the predetermined identity list in the identity area of the predetermined page includes:
In response to determining that the number of first page identities included in the predetermined identity list is smaller than or equal to a predetermined number threshold, displaying all of the first page identities in the predetermined identity list in the identity area of the predetermined page in a first arrangement manner;
In response to determining that the number of first page identities included in the predetermined identity list is larger than a predetermined number threshold, displaying a part of the first page identities in the predetermined identity list in the identity area of the predetermined page in a second arrangement manner.

According to one or more embodiments of the present disclosure, example 11 provides the method of example 10, wherein after displaying the part of the first page identities in the predetermined identity list in the identity area of the predetermined page in the second arrangement mode, the method further includes:
In response to an identity updating operation acting on the predetermined area, updating the first page identities displayed in the predetermined area based on an arrangement order of the first page identities in the predetermined identity list.

According to one or more embodiments of the present disclosure, example 12 provides an apparatus for presenting media content, including:
A content presenting module, configured to: present media content in a predetermined page, and display a predetermined identity list in an identity area of the predetermined page, wherein the predetermined page is a currently displayed media content presenting page, and the predetermined identity list includes a first page identity corresponding to at least one media content presenting page; and
A window displaying module, configured to: in response to a window displaying operation acting on the predetermined page, display a configuration window in the predetermined page and keep presenting the media content in the predetermined page, wherein the configuration window is set to configure the first page identity in the predetermined identity list.

According to one or more embodiments of the present disclosure, example 13 provides an electronic device, including:
At least one processor; and
A memory communicatively connected to the at least one processor, wherein,
The memory stores a computer program executable by the at least one processor, and the computer program is executed by the at least one processor to enable the at least one processor to perform the method for presenting media content of any of examples 1-11.

According to one or more embodiments of the present disclosure, example 14 provides a computer-readable storage medium storing computer instructions, when executed by a processor, implementing the method for presenting media content of any of examples 1-11.

According to one or more embodiments of the present disclosure, example provides 15. A computer program product, including a computer program, the computer program, when executed by a processor, implementing the method for presenting media content of any of examples 1-11.

Further, while operations are depicted in a particular order, this should not be understood as requiring the operations to be performed in the particular order shown or in a sequential order. In certain circumstances, multitasking and parallel processing may be advantageous. Certain features described in the context of separate embodiments may also be implemented in combination in a single embodiment. Conversely, various features described in the context of a single embodiment may also be implemented in multiple embodiments, alone or in any suitable sub-combination.

## Claims

1. A method for presenting media content, comprising:
presenting media content in a preset page, and displaying a predetermined identity list in an identity area of the predetermined page, wherein the predetermined page is a currently displayed media content presenting page, and the predetermined identity list comprises a first page identity corresponding to at least one media content presenting page; and
in response to a window displaying operation acting on the predetermined page, displaying a configuration window in the predetermined page, and keeping presenting the media content in the predetermined page, wherein the configuration window is set to configure the first page identity in the predetermined identity list.

2. The method of claim 1, wherein after displaying the configuration window of the first page identity in the predetermined page, the method further comprises:
in response to a configuration operation acting on the configuration window, updating the first page identity in the predetermined identity list.

3. The method of claim 2, wherein updating the first page identity in the predetermined identity list comprises:
deleting a target first page identity in the predetermined identity list; or
adding a target second page identity as the first page identity into the predetermined identity list; or
adjusting an arrangement order of a target first page identity in the predetermined identity list;
wherein the target first page identity is a first page identity corresponding to the configuration operation, the target second page identity is a second page identity corresponding to the configuration operation, and the second page identity is a page identity not comprised in the predetermined identity list.

4. The method of claim 3, wherein the configuration window comprises a first area and a second area, the first area is set to present a first page identity already comprised in the predetermined identity list, the second area is set to present a second page identity not comprised in the predetermined identity list;
the configuration operation comprises a first configuration operation of dragging a target first page identity from the first area to the second area, a second configuration operation of dragging a target second page identity from the second area to the first area, or a third configuration operation of dragging a target first page identity within the first area.

5. The method of claim 4, wherein before updating the first page identity in the predetermined identity list, the method further comprises:
controlling a target page identity corresponding to the configuration operation to move along with the configuration operation, wherein the target page identity is the target first page identity or the target second page identity;
updating the first page identity in the predetermined identity list comprises:
in response to an end of triggering the configuration operation, displaying the target page identity at a displaying position corresponding to the configuration operation in the configuration window, and updating the first page identity in the predetermined identity list.

6. The method of claim 3, wherein at least one of the following is displayed in the configuration window: a deleting control corresponding to at least part of the first page identity already comprised in the predetermined identity list, an adding control corresponding to a second page identity not comprised in the predetermined identity list;
the configuration operation comprises: a fourth configuration operation acting on a deleting control corresponding to a target first page identity, a fifth configuration operation acting on an adding control corresponding to a target second page identity, or a sixth configuration operation of dragging the target first page identity within the configuration window.

7. The method of claim 6, wherein deleting the target first page identity in the predetermined identity list comprises:
displaying the target first page identity at a displaying position corresponding to the configuration operation in the configuration window, deleting the target first page identity from the predetermined identity list, and switching from displaying the deleting control corresponding to the target first page identity to displaying an adding control.

8. The method of claim 6, wherein adding the target second page identity as the first page identity into the predetermined identity list comprises:
displaying the target second page identity at a displaying position corresponding to the configuration operation in the configuration window, adding the target second page identity as a first page identity to the predetermined identity list, and switching from displaying the adding control corresponding to the target second page identity to displaying a deleting control.

9. The method of claim 6, wherein before adjusting the arrangement order of the target first page identity in the predetermined identity list, the method further comprises:
controlling the target first page identity to move along with the configuration operation in the configuration window;
adjusting the arrangement order of the target first page identity in the predetermined identity list comprises:
in response to an end of trigging the configuration operation, displaying the target first page identity at a displaying position corresponding to the configuration operation in the configuration window, and adjusting the arrangement order of the target first page identity in the predetermined identity list based on an arrangement order of the target first page identity in the configuration window.

10. The method of any of claims 1-9, wherein displaying the predetermined identity list in the identity area of the predetermined page comprises:
in response to determining that the number of first page identities comprised in the predetermined identity list is smaller than or equal to a predetermined number threshold, displaying all of the first page identities in the predetermined identity list in the identity area of the predetermined page in a first arrangement manner;
in response to determining that the number of first page identities comprised in the predetermined identity list is larger than a predetermined number threshold, displaying a part of the first page identities in the predetermined identity list in the identity area of the predetermined page in a second arrangement manner.

11. The method of claim 10, wherein after displaying the part of the first page identities in the predetermined identity list in the identity area of the predetermined page in the second arrangement mode, the method further comprises:
in response to an identity updating operation acting on the predetermined area, updating the first page identities displayed in the predetermined area based on an arrangement order of the first page identities in the predetermined identity list.

12. An apparatus for presenting media content, comprising:
a content presenting module, configured to: present media content in a predetermined page, and display a predetermined identity list in an identity area of the predetermined page, wherein the predetermined page is a currently displayed media content presenting page, and the predetermined identity list comprises a first page identity corresponding to at least one media content presenting page; and
a window displaying module, configured to: in response to a window displaying operation acting on the predetermined page, display a configuration window in the predetermined page and keep presenting the media content in the predetermined page, wherein the configuration window is set to configure the first page identity in the predetermined identity list.

13. An electronic device, comprising:
at least one processor; and
a memory communicatively connected to the at least one processor, wherein,
the memory stores a computer program executable by the at least one processor, and the computer program is executed by the at least one processor to enable the at least one processor to perform the method for presenting media content of any of claims 1-11.

14. A computer-readable storage medium storing computer instructions, when executed by a processor, implementing the method for presenting media content of any of claims 1-11.

15. A computer program product, comprising a computer program, the computer program, when executed by a processor, implementing the method for presenting media content of any of claims 1-11.
